# EUROPEAN PATENT SPECIFICATION

(11) **EP 2 958 167 B1**
(45) Date of publication and mention of the grant of the patent: **13.06.2018**
(21) Application number: 14751666.0
(22) Date of filing: 13.02.2014
(51) Int. Cl.: H01M 2/10, H01M 2/20, H01M 2/18

(54) **BATTERY MODULE**
BATTERIEMODUL
MODULE DE BATTERIE

(30) Priority: 13.02.2013 JP 2013025791; 29.03.2013 JP 2013073824
(43) Date of publication of application: 23.12.2015
(73) Proprietor: Kabushiki Kaisha Toyota Jidoshokki, Kariya-shi, Aichi-ken 448-8671 (JP)
(72) Inventor: MORISAKU, Naoto, Kariya-shi Aichi 448-8671 (JP); KATO, Takayuki, Kariya-shi Aichi 448-8671 (JP); KOBAYASHI, Katsumasa, Kariya-shi Aichi 448-8671 (JP); UEDA, Hiromi, Kariya-shi Aichi 448-8671 (JP); WATANABE, Shintaro, Kariya-shi Aichi 448-8671 (JP); OISHI, Hidefumi, Kariya-shi Aichi 448-8671 (JP); SAKAI, Takashi, Kariya-shi Aichi 448-8671 (JP); MAEDA, Kazuki, Kariya-shi Aichi 448-8671 (JP)
(74) Representative: TBK
(86) International application number: PCT/JP2014/053269
(87) International publication number: WO 2014/126128

(56) References cited:
- EP-A1- 2 432 044
- JP-A- 2008 166 191
- JP-A- 2010 113 888
- JP-A- 2010 176 997
- JP-A- 2011 076 936
- JP-A- 2011 091 043
- JP-A- 2013 073 917
- US-A- 4 418 127
- US-A1- 2002 192 543
- US-A1- 2010 190 050
- US-A1- 2012 315 508

## Description

The present invention relates to a battery module that has battery cells connected in series.

### BACKGROUND ART

As a battery module having battery cells connected in series, the one disclosed in JP 2012-230775 A is known.

In the battery module of JP 2012-230775 A, battery cells are arranged alternately in opposite directions. A positive-side external terminal and a negative-side external terminal are attached to the lid of each battery cell. The positive-side external terminal and the negative-side external terminal of adjacent battery cells are connected to each other by a bus bar.

If a positive-side external terminal and a negative-side external terminal at wrong positions are connected to each other when establishing connection of the positive-side external terminals and the negative-side external terminals with bus bars, a short circuit is established. This can be a cause of a malfunction of the battery cells.

US 2010/190050 A1 shows a battery array provided with a plurality of rectangular battery cells having electrode terminals, separators inserted between adjacent rectangular battery cells to insulate those rectangular battery cells, and connecting terminals to electrically connect adjacent electrode terminals of rectangular battery cells stacked with intervening separators. Connecting terminals are attached to electrode terminals by a threaded fastening system, and separators are provided with rotation prevention walls that contact connecting terminals and prevent connecting terminal rotation during threaded fastener tightening.

### SUMMARY OF THE INVENTION

It is the object of the present invention to provide a battery module which is capable of preventing bus bars from being attached to wrong connecting terminals.

The object of the present invention is achieved by a battery module having the features of claim 1.

A further advantageous development of the present invention is shown in the dependent claim.

According to an advantage of the present invention, a battery module comprising first and second battery bodies is provided, wherein each of the first and second battery bodies includes two connecting terminals of different polarities, the first battery bodies and the second battery bodies are arranged alternately such that the polarities of the connecting terminals of each adjacent pair thereof are different from each other, each first battery body is constituted by a first battery holder and a first battery cell, which is held by the first battery holder, each second battery body is constituted by a second battery holder and a second battery cell, which is held by the second battery holder, each first battery cell includes a first protrusion on a terminal surface, on which the connecting terminals are provided, each second battery cell includes a second protrusion on a terminal surface, on which the connecting terminals are provided, wherein the second protrusion does not face any of the first protrusions in an arrangement direction of the battery cells, each first battery holder includes a first projecting portion, wherein, when an attempt is made to fit the second battery cell to the first battery holder, the first projecting portion contacts the second protrusion, thereby preventing the second battery cell from being accommodated in the first battery holder, and each second battery holder includes a second projecting portion, wherein, when an attempt is made to fit the first battery cell to the second battery holder, the second projecting portion contacts the first protrusion, thereby preventing the first battery cell from being accommodated in the second battery holder.

### BRIEF DESCRIPTION OF THE DRAWINGS

Fig. 1 is a perspective view illustrating a battery module according to one embodiment;
Fig. 2 is a plan view illustrating the battery module of the embodiment;
Fig. 3 is a perspective view illustrating a prismatic battery of the embodiment;
Fig. 4 is a perspective view illustrating a prismatic battery and a battery holder of the embodiment;
Figs. 5A and 5B are perspective views illustrating a first battery holder of the embodiment;
Figs. 6A and 6B are perspective views illustrating a second battery holder of the embodiment;
Fig. 7 is a diagram showing the relationship between wall members and connecting terminals of the embodiment;
Fig. 8 is a partially enlarged plan view illustrating the battery module;
Fig. 9A is a perspective view illustrating a first battery module according to a modification; and
Fig. 9B is a plan view illustrating the battery module of the modification.

### MODES FOR CARRYING OUT THE INVENTION

A battery module according to one embodiment will now be described.

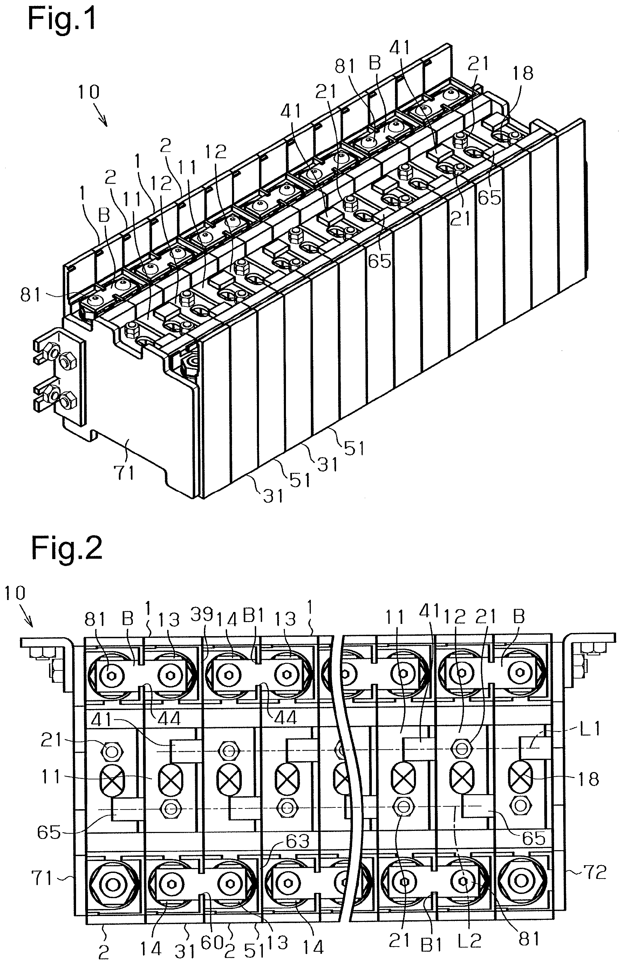

As shown in Figs. 1 and 2, a battery module 10 includes first battery bodies 1 and second battery bodies 2, which are alternately arranged side by side. Each first battery body 1 is constituted by a first battery holder 31 and a first battery cell, which is a first prismatic battery 11, which is held by the first battery holder 31. Each second battery body 2 is constituted by a second battery holder 51 and a second battery cell, which is a second prismatic battery 12, which is held by the second battery holder 51.

The first prismatic battery 11 and the second prismatic battery 12 are identical prismatic batteries that are arranged in opposite directions. That is, when the first prismatic batteries 11 and the second prismatic batteries 12 are arranged alternately, positive terminals 13 of the first prismatic batteries 11 and positive terminals 13 of the second prismatic batteries 12 are located at positions in different directions, and negative terminals 14 of the first prismatic batteries 11 and negative terminals 14 of the second prismatic batteries 12 are located at positions in different directions.

Thus, the positive terminal 13 of each first prismatic battery 11 (each first battery body 1) and the negative terminal 14 of the corresponding second prismatic battery 12 (the corresponding second battery body 2) are adjacent to each other in the arrangement direction of the prismatic batteries 11, 12. Also, the negative terminal 14 of each first prismatic battery 11 and the positive terminal 13 of the corresponding second prismatic battery 12 are adjacent to one another in the arrangement direction of the prismatic batteries 11, 12. The positive terminal 13 and the negative terminal of the prismatic batteries 11, 12 of each adjacent pair thereof are connected to each other by a plate-like bus bar B, so that the prismatic batteries 11, 12 are connected in series.

The battery module 10 has end plates 71, 72 provided at the opposite ends in the arrangement direction of the prismatic batteries 11, 12. The prismatic batteries 11, 12 are held by the end plates 71, 72.

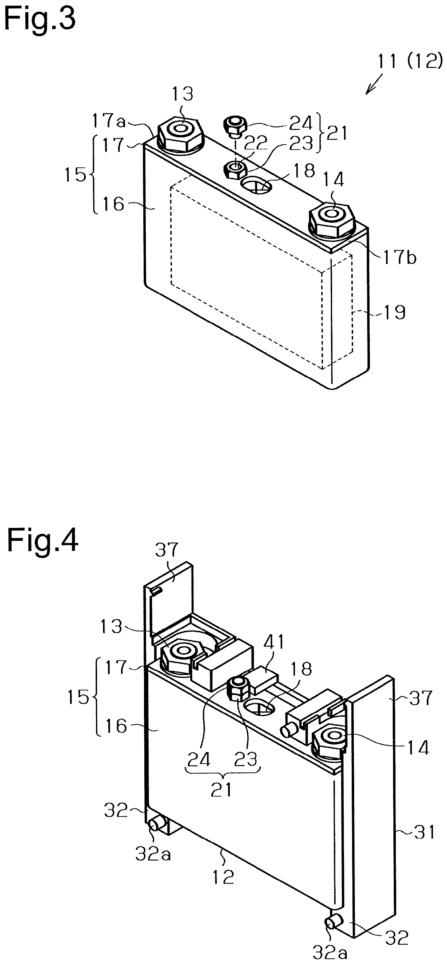

As shown in Fig. 3, each of the prismatic batteries 11, 12 includes a case 15 and an electrode 19 accommodated in the case 15. The case 15 includes a rectangular box-like case body 16 with a bottom and a rectangular plate-like lid member 17. The case body 16 accommodates the electrode 19 and the lid member 17 closes the opening of the case body 16. A positive terminal 13, which is a connecting terminal, is provided at a first edge section 17a in the longitudinal direction of the lid member 17. A negative terminal 14, which is a connecting terminal, is provided at a second longitudinal edge section 17b of the lid member 17. The positive terminal 13 and the negative terminal 14 project to the outside of the case 15. In the present embodiment, the surface intersecting with the thickness direction of the lid member 17 (the surface from which the connecting terminals project) is a terminal surface.

A breakable open valve 18 is provided at the center in the longitudinal direction of the lid member 17. In the longitudinal direction of the lid member 17, an infusion portion 21 is provided at a position slightly closer to the positive terminal 13 than the open valve 18. The infusion portion 21 is used for infusing electrolytic solution into the case 15. The infusion portion 21 has a port portion 23 and a plug 24. The port portion 23 has an infusion port 22, which connects the interior and the exterior of the case 15, and the plug 24 closes the infusion port 22. The infusion portion 21 protrudes outward of the case 15 from the lid member 17 in the thickness direction of the lid member 17.

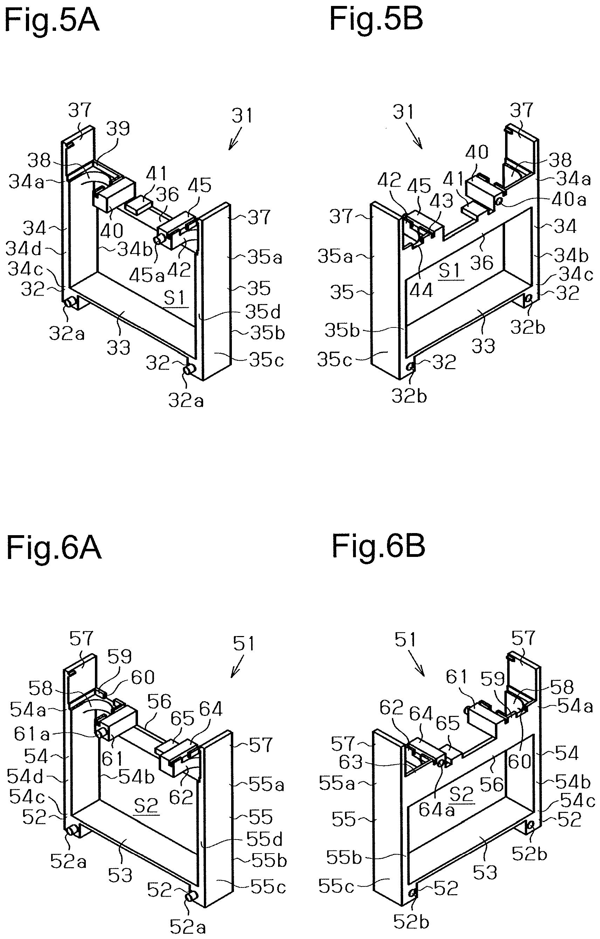

As shown in Figs. 5A and 5B, each first battery holder 31 includes a rectangular plate-like first covering portion 33. The first covering portion 33 has, at the opposite ends in the longitudinal direction, rectangular plate-like second and third covering portions 34, 35. The second and third covering portions 34, 35 extend in the thickness direction of the first covering portion 33. The region surrounded by the covering portions 33, 34, 35 serves as an accommodating portion S1, which accommodates a first prismatic battery 11.

A rectangular plate-like fourth covering portion 36 extends between a first edge section 34a in the longitudinal direction of the second covering portion 34 and a first edge section 35a in the longitudinal direction of the third covering portion 35. The fourth covering portion 36 is located between first edge sections 34b, 35b in the transverse direction of the covering portions 34, 35. The first longitudinal edge section 34a of the second covering portion 34 is an edge section opposite to the edge section at which the first covering portion 33 is provided. The first longitudinal edge section 35a of the third covering portion 35 is an edge section opposite to the edge section at which the first covering portion 33 is provided. The thickness direction of the fourth covering portion 36 agrees with the transverse direction of the covering portion 34, 35, and the longitudinal direction of the fourth covering portion 36 agrees with the direction in which the second covering portion 34 and third covering portion 35 face each other. The direction perpendicular to the thickness direction and the longitudinal direction of the fourth covering portion 36 is the transverse direction of the fourth covering portion 36.

Also, U-shaped terminal accommodating portions 38, 42 are provided at the opposite ends in the longitudinal direction of the fourth covering portion 36. Specifically, the terminal accommodating portions 38, 42 are provided on the end faces intersecting with the transverse direction of the fourth covering portion 36 and open in the thickness direction of the fourth covering portion 36. The terminal accommodating portions 38, 42 are continuously formed with the covering portions 34, 35, respectively. The terminal accommodating portions 38, 42 have wall members 39, 43, respectively. Each of the wall members 39, 43 projects from the surface opposite to the surface joined to the fourth covering portion 36. The wall member 43 has a cutout 44. In contrast, the wall member 39 has no cutout.

A quadrangular prism-like positioning portion 40 is provided on an end face that intersects with the transverse direction of the fourth covering portion 36. The positioning portion 40 is adjacent to the terminal accommodating portion 38. The axis of the positioning portion 40 extends in the transverse direction of the covering portions 34, 35. The positioning portion 40 extends from the first transverse edge section 34b of the second covering portion 34 toward a second transverse edge section 34d. One of the two surfaces of the positioning portion 40 that intersect with its axis (the end face corresponding to the accommodating portion S1) is a flat surface. The other one of the two surfaces of the positioning portion 40 that intersect with its axis (the end face that is flush with the fourth covering portion 36 in the present embodiment) has a recess 40a. A rectangular plate-like first projecting portion 41 is provided on an end face that intersects with the transverse direction of the fourth covering portion 36. The first projecting portion 41 is adjacent to the positioning portion 40. The first projecting portion 41 projects from the first transverse edge section 34b of the second covering portion 34 toward the second transverse edge section 34d. The accommodating portion S1 accommodates a first prismatic battery 11. Therefore, the first projecting portion 41 projects toward the position where the first prismatic battery 11 is provided.

A quadrangular prism-like positioning portion 45 is provided on an end face that intersects with the transverse direction of the fourth covering portion 36. The positioning portion 45 is adjacent to the terminal accommodating portion 42. The axis of the positioning portion 45 extends in the transverse direction of the covering portions 34, 35. The positioning portion 45 extends from the first transverse edge section 35b of the third covering portion 35 toward a second transverse edge section 35d. One of the two surfaces of the positioning portion 45 that intersect with its axis (the end face corresponding to the accommodating portion S1) has a protrusion 45a. The other one of the two surfaces of the positioning portion 45 that intersect with its axis (the end face that is flush with the fourth covering portion 36 in the present embodiment) is a flat surface.

A rectangular plate-like projecting portion 37 is formed continuously with each of the first longitudinal edge sections 34a, 35a of the second covering portion 34 and the third covering portion 35. The projecting portions 37 extend in the direction in which the covering portions 34, 35 extend. A quadrangular prism-like leg 32 is provided at each of second longitudinal edge sections 34c, 35c of the second covering portion 34 and the third covering portion 35. The axes of the legs 32 extend in the transverse direction of the covering portions 34, 35. One of the two surfaces of each leg 32 that intersect with its axis (the end face corresponding to the accommodating portion S1) has a protrusion 32a. The other one of the two surfaces of the leg 32 that intersect with its axis (the end face that is flush with the fourth covering portion 36 in the present embodiment) has a recess 32b.

As shown in Figs. 6A and 6B, each second battery holder 51 includes a rectangular plate-like first covering portion 53. The first covering portion 53 has, at the opposite ends in the longitudinal direction, rectangular plate-like second and third covering portions 54, 55. The second and third covering portions 54, 55 extend in the thickness direction of the first covering portion 53. The region surrounded by the covering portions 53, 54, 55 serves as an accommodating portion S2, which accommodates a second prismatic battery 12. A rectangular plate-like fourth covering portion 56 extends between a first edge section 54a in the longitudinal direction of the second covering portion 54 and a first edge section 55a in the longitudinal direction of the third covering portion 55. The fourth covering portion 56 is located between first edge sections 54b, 55b in the transverse direction of the covering portions 54, 55. The first longitudinal edge section 54a of the second covering portion 54 is an edge section opposite to the edge section at which the first covering portion 53 is provided. The first longitudinal edge section 55a of the third covering portion 55 is an edge section opposite to the edge section at which the first covering portion 53 is provided. The thickness direction of the fourth covering portion 56 agrees with the transverse direction of the covering portion 54, 55, and the longitudinal direction of the fourth covering portion 56 agrees with the direction in which the second covering portion 54 and third covering portion 55 face each other. The direction perpendicular to the thickness direction and the longitudinal direction of the fourth covering portion 56 is the transverse direction of the fourth covering portion 56.

Also, U-shaped terminal accommodating portions 58, 62 are provided at the opposite ends in the longitudinal direction of the fourth covering portion 56. Specifically, the terminal accommodating portions 58, 62 are provided on the end faces intersecting with the transverse direction of the fourth covering portion 56 and open in the thickness direction of the fourth covering portion 56. The terminal accommodating portions 58, 62 are continuously formed with the covering portions 54, 55, respectively. The terminal accommodating portions 58, 62 have wall members 59, 63, respectively. Each of the wall members 59, 63 projects from the surface opposite to the surface joined to the fourth covering portion 56. The wall member 59 has a cutout 60. In contrast, the wall member 63 has no cutout. The cutouts 44, 60 are formed in the terminal accommodating portions 42, 58, which accommodate connecting terminals of the same polarity (the negative terminals 14 in the present embodiment).

A quadrangular prism-like positioning portion 61 is provided on an end face that intersects with the transverse direction of the fourth covering portion 56. The positioning portion 61 is adjacent to the terminal accommodating portion 58 and has an axis that extends in the transverse direction of the covering portions 54, 55. The positioning portion 61 extends from the first transverse edge section 54b of the second covering portion 54 toward a second transverse edge section 54d. One of the two surfaces of the positioning portion 61 that intersect with its axis (the end face corresponding to the accommodating portion S2) has a protrusion 61a. The other one of the two surfaces of the positioning portion 61 that intersect with its axis (the end face that is flush with the fourth covering portion 56 in the present embodiment) is a flat surface.

A quadrangular prism-like positioning portion 64 is provided on an end face that intersects with the transverse direction of the fourth covering portion 56. The positioning portion 64 is adjacent to the terminal accommodating portion 62. The axis of the positioning portion 64 extends in the transverse direction of the covering portions 54, 55. The positioning portion 64 extends from the first transverse edge section 55b of the third covering portion 55 toward a second transverse edge section 55d. One of the two surfaces of the positioning portion 64 that intersect with its axis (the end face corresponding to the accommodating portion S2) is a flat surface. The other one of the two surfaces of the positioning portion 64 that intersect with its axis (the end face that is flush with the fourth covering portion 56 in the present embodiment) has a recess 64a. A rectangular plate-like second projecting portion 65 is provided on an end face that intersects with the transverse direction of the fourth covering portion 56. The second projecting portion 65 is adjacent to the positioning portion 64. The second projecting portion 65 projects from the first transverse edge section 55b of the third covering portion 55 toward the second transverse edge section 55d. The accommodating portion S2 accommodates a second prismatic battery 12. Therefore, the second projecting portion 65 projects toward the position where the second prismatic battery 12 is provided.

A rectangular plate-like projecting portion 57 is formed continuously with each of the first longitudinal edge sections 54a, 55a of the second covering portion 54 and the third covering portion 55. The projecting portions 57 extend in the direction in which the covering portions 54, 55 extend. A quadrangular prism-like leg 52 is provided at each of second longitudinal edge sections 54c, 55c of the second covering portion 54 and the third covering portion 55. The axes of the legs 52 extend in the transverse direction of the covering portions 54, 55. One of the two surfaces of each leg 52 that intersect with its axis (the end face corresponding to the accommodating portion S2) has a protrusion 52a. The other one of the two surfaces of the leg 52 that intersect with its axis (the end face that is flush with the fourth covering portion 56 in the present embodiment) has a recess 52b.

The accommodating portion S1 of each first battery holder 31 accommodates a first prismatic battery 11. Specifically, the first covering portion 33 covers one surface in the vertical direction of the first prismatic battery 11. One surface in the vertical direction of the first prismatic battery 11 is opposite to the surface on which the positive terminal 13 and the negative terminal 14 are provided. The second covering portion 34 and the third covering portion 35 each cover a surface that intersects with the widthwise direction of the first prismatic battery 11. The positive terminal 13 of the first prismatic battery 11 is accommodated in the terminal accommodating portion 38, and the negative terminal 14 is accommodated in the terminal accommodating portion 42. Thus, the first battery holder 31 and the first prismatic battery 11, which is held by the first battery holder 31, form a first battery body 1.

The accommodating portion S2 of each second battery holder 51 accommodates a second prismatic battery 12. Specifically, the first covering portion 53 covers one surface in the vertical direction of the second prismatic battery 12. One surface in the vertical direction of the second prismatic battery 12 is opposite to the surface on which the positive terminal 13 and the negative terminal 14 are provided. The second covering portion 54 and the third covering portion 55 each cover a surface that intersects with the widthwise direction of the second prismatic battery 12. The positive terminal 13 of the second prismatic battery 12 is accommodated in the terminal accommodating portion 62, and the negative terminal 14 is accommodated in the terminal accommodating portion 58. Thus, the second battery holder 51 and the second prismatic battery 12, which is held by the second battery holder 51, form a second battery body 2.

As shown in Fig. 2, the first battery bodies 1 and the second battery bodies 2 are arranged side by side and connected together in series by the bus bars B. Each bus bar B has a cutout B1 in each of the opposite edge sections in the transverse direction of the rectangular plate member. Bolts 81, which extend through each bus bar B, are threaded to the positive terminal 13 and the negative terminal 14 to fix the bus bar B to each of the prismatic batteries 11, 12. Each bus bar extends between adjacent pair of the terminal accommodating portions 38, 42, 58 via the cutout 44 or 60. The cutouts B1 of each bus bar B receive the wall members 43, 59 projecting from the corresponding terminal accommodating portions 42, 58.

The protrusion 45a formed on the positioning portion 45 of the first battery holder 31 of each first battery body 1 is inserted in the recess 64a formed in the positioning portion 64 of the second battery holder 51 of the corresponding second battery body 2. The protrusions 32a formed on the first battery holder 31 of each first battery body 1 are inserted in the recesses 52b formed in the second battery holder 51 of the corresponding second battery body 2.

Also, the protrusion 61a formed on the positioning portion 61 of the second battery holder 51 of each second battery body 2 is inserted in the recess 40a formed in the positioning portion 40 of the first battery holder 31 of the corresponding first battery body 1. The protrusions 52a formed on the second battery holder 51 of each second battery body 2 are inserted in the recesses 32b formed in the first battery holder 31 of the corresponding first battery body 1.

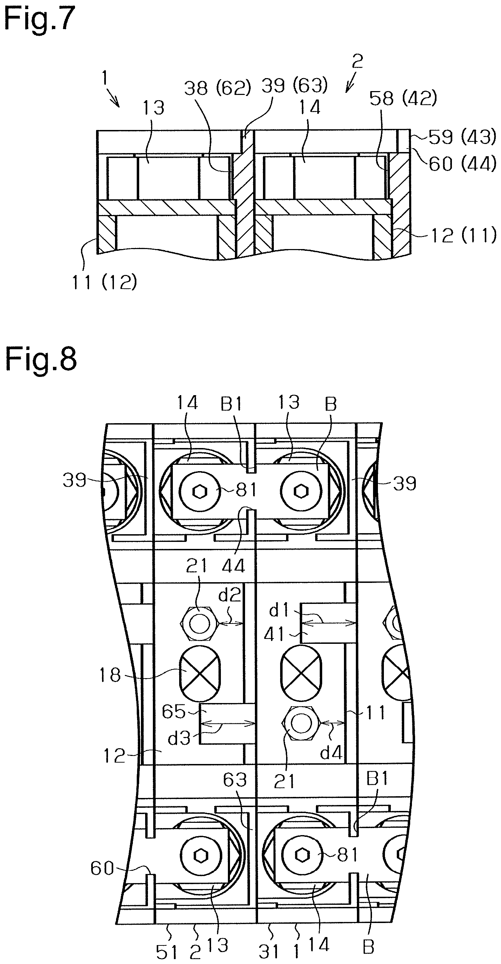

The wall members 39, 43, 59, 63 will now be described with reference to Fig. 7. Fig. 7 is an enlarged cross-sectional view showing a first battery body 1 and a second battery body 2, which are arranged side by side. Specifically, Fig. 7 illustrates a part of the first and second battery bodies 1, 2 in the vertical direction where the positive terminal 13 and the negative terminals 14 are provided.

With prismatic batteries 11, 12 held by the first battery holder 31 and the second battery holder 51 as shown in Fig. 7, the wall members 39, 63 project in the vertical direction of the prismatic batteries 11, 12 in relation to the positive terminals 13 and the negative terminals 14 of the prismatic batteries 11, 12.

The first projecting portion 41 and the second projecting portion 65 will now be described with reference to Fig. 8. Fig. 8 is an enlarged plan view showing first and second battery bodies 1, 2, which are arranged side by side.

As shown in Fig. 8, the longitudinal dimension d1 (the projection amount) of the first projecting portion 41 is greater than the shortest distance d2 from the edge of the second prismatic battery 12 in the thickness direction to the infusion portion 21. Also, the longitudinal dimension d3 (the projection amount) of the second projecting portion 65 is greater than the shortest distance d4 from the edge of the first prismatic battery 12 in the thickness direction to the infusion portion 21.

As shown in Fig. 2, the wall member 39 of each first battery holder 31 and the wall member 63 of each second battery holder 51 are each provided between two bus bars B that are adjacent to each other in the arrangement direction of the prismatic batteries 11, 12. Each bus bar B connects an adjacent pair of a positive terminal 13 and a negative terminal 14 via one of the cutouts 44, 60 formed in the wall members 43, 59.

Also, the first projecting portion 41 of each first battery holder 31 faces the infusion portion 21 of the corresponding second prismatic batteries 12 in the arrangement direction of the prismatic batteries 11, 12. Also, the second projecting portion 65 of each second battery holder 51 faces the infusion portion 21 of the corresponding first prismatic batteries 11 in the arrangement direction of the prismatic batteries 11, 12. That is, the infusion portions 21 of the second prismatic batteries 12 are located on a line L1, which connects the first projecting portions 41 together, and the infusion portions 21 of the first prismatic batteries 11 are located on a line L2, which connects the second projecting portions 65 together. Therefore, each first projecting portion 41 is located at such a position that, if an attempt is made to fit a second prismatic battery 12 to the first battery holder 31, the first projecting portion 41 contacts the infusion portion 21 of the second prismatic batteries 12. Also, each second projecting portion 65 is located at such a position that, if an attempt is made to fit a first prismatic battery 11 to the second battery holder 51, the second projecting portion 65 contacts the infusion portion 21 of the first prismatic batteries 11. The plug 24 of the infusion port 22 of each first prismatic battery 11 corresponds to a first protrusion, and the plug 24 of the infusion port 22 of each second prismatic battery 12 corresponds to a second protrusion.

Operation of the battery module 10 of the present embodiment will now be described.

An indicator, which is the wall member 39 or the wall member 63, is provided between the bus bars B adjacent to each other in the arrangement direction of the prismatic batteries 11, 12. The wall members 39, 63 have no cutouts.

Each bus bar B connects an adjacent pair of a positive terminal 13 and a negative terminal 14 via one of the cutouts 44, 60 formed in the terminal accommodating portions 42, 62. That is, it can be understood that parts in which the cutouts 44, 60 are formed function as indicators that allow for connection by the bus bars B. In other words, the cutouts 44, 60 guide the arrangement of the bus bars B such that the prismatic batteries 11, 12 of each adjacent pair thereof are connected in series. The bus bars B are arranged in a staggered pattern in the arrangement direction of the prismatic batteries 11, 12.

When the bus bars B are put in place, the cutouts 44, 60 serve as guides that allow the correct positions of the bus bars B to be determined. If an attempt is made to connect, with a bus bar B, terminals on the opposite sides of one of the wall members 39, 63, the wall member 39 (63) hampers placement of the bus bar B. Thus, the bus bar B is prevented from placed at a wrong position.

As shown in Fig. 4, if an attempt is made to accommodate a second prismatic battery 12 in a first battery holder 31, that is, if an attempt is made to accommodate a prismatic battery with the reverse arrangement of connecting terminals, the infusion portion 21 contacts the first projecting portion 41. That is, the second prismatic battery 12 is prevented from being accommodated in the first battery holder 31. Likewise, the first prismatic battery 11 is prevented from being accommodated in the second battery holder 51. To "contact" refers to a case in which the infusion portion 21 and the first projecting portion 41 contact each other without the second prismatic batteries 12 held in the first battery holder 31.

When the battery module 10 is assembled, the first battery holders 31 (the first battery bodies 1) each holding a first prismatic battery 11 and the second battery holders 51 (the second battery bodies 2) each holding a second prismatic battery 12 are arranged to contact one another. At this time, if two first battery holders 31 or two second battery holders 51 were arranged next to each other, connecting terminals of the same polarity would be adjacent to each other in the arrangement direction of the prismatic batteries 11, 12, which would be a cause of a short circuit. A more specific description will be given below.

In general, when forming a battery module by connecting battery cells in series, the battery cells are arranged such that connecting terminals of different polarities are adjacent to each other in the arrangement direction of the battery cells, so that the interconnection resistance is reduced. At this time, if connecting terminals of the same polarity were arranged to be adjacent to each in the arrangement direction of the battery cells, connection of these connecting terminals would establish a short circuit and thus cause a malfunction of the battery cells. Thus, when battery cells are arranged side by side, connecting terminals of different polarities are preferably arranged to be adjacent to each other in the arrangement direction of the battery cells.

In the present embodiment, the second prismatic battery 12 is prevented from being accommodated in the first battery holder 31, and the first prismatic battery 11 is prevented from being accommodated in the second battery holders 51. Thus, when the first battery bodies 1 and the second battery bodies 2 are arranged alternately, connecting terminals of the same polarity are prevented from being adjacent to each other in the arrangement direction of the prismatic batteries 11, 12.

In the present embodiment, the positioning portions 40, 45, 61, 64, which are formed in the first battery holders 31 and the second battery holders 51, prevent two first battery holders 31 or two second battery holders 51 from being arranged to next to each other. Specifically, if an attempt is made to place two first battery holders 31 next to each other, the protrusion 45a, which is formed on one side in the longitudinal direction of the positioning portion 45 of one of the first battery holder 31 contacts the flat surface of the positioning portion 45 of the other first battery holder 31. This prevents the two first battery holders 31 from being placed next to each other. Also, if an attempt is made to place two second battery holders 51 next to each other, the protrusion 61a formed on one side in the longitudinal direction of the positioning portion 61 of one of the second battery holder 51 contacts the flat surface of the positioning portion 61 of the other second battery holder 51. This prevents the two second battery holders 51 from being placed next to each other.

The above described embodiment has the following advantages.

Each first battery holder 31 has a first projecting portion 41, which is configured to contact the infusion portion 21 of the corresponding second prismatic battery 12. Each second battery holder 51 has a second projecting portion 65, which is configured to contact the infusion portion 21 of the corresponding first prismatic battery 11. This prevents each of the prismatic batteries 11, 12 from being held by a wrong battery holder. Therefore, connecting terminals of the same polarity are unlikely to be connected to each other, so that a short circuit is prevented.

The plugs 24 of the infusion portions 21 are used as the first protrusions and the second protrusions. Therefore, no additional structures for forming the first protrusions and the second protrusions need to be provided on the first prismatic batteries 11 or the second prismatic batteries 12.

The embodiment may be modified as follows.

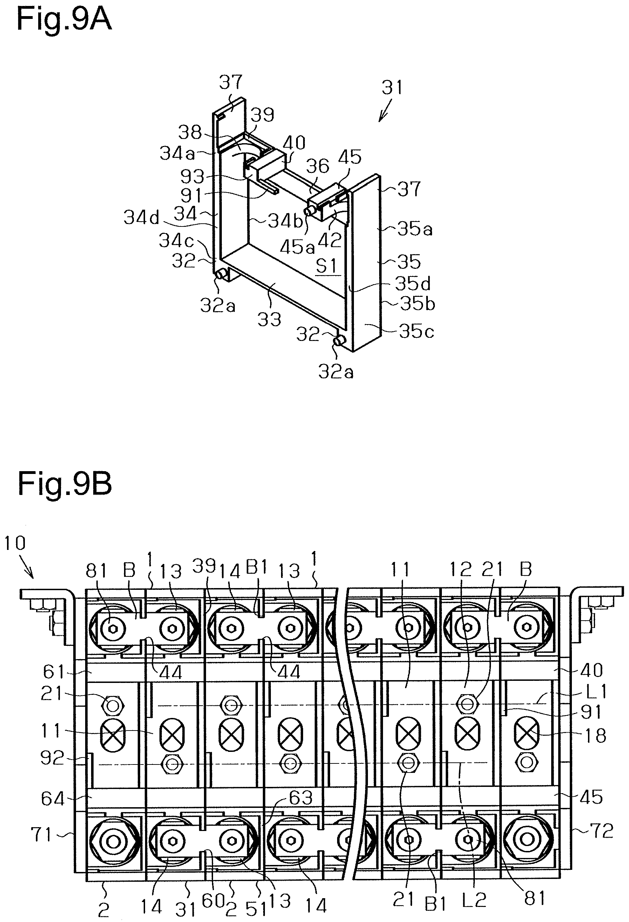

As shown in Fig. 9A, the first projecting portion 91 may be provided on the positioning portion 40 of the first battery holder 31. The first projecting portion 91 extends from the positioning portion 40 toward the positioning portion 45. That is, the first projecting portions 91 extends from the positioning portion 40 along a vertical surface of the first prismatic battery 11 and in the widthwise direction of the first prismatic batteries 11. The first projecting portion 91 has an elongated plate-like shape. Of the two surfaces of the positioning portion 40 that intersect with the axis, the first projecting portion 91 is formed continuously with a flat end face 93. The flat end face 93 is an end face in which the recess 40a is not formed.

In the modification illustrated in Fig. 9B, the positioning portion 64 of each second battery holder 51 has a second projecting portion 92, like the first battery holders 31. The second projecting portion 92 extends from the positioning portion 64 toward the positioning portion 61. The second projecting portion 92 has an elongated plate-like shape.

For example, to form a first projecting portion 41 and a second projecting portion 65 on the fourth covering portions 36, 56 as in the case of the first battery holders 31 and the second battery holders 51 of the above illustrated embodiment, the fourth covering portions 36, 56 need to have projecting portions 41, 65 extending toward the infusion portions 21 (protrusions). At this time, the projecting portions 41, 65 cover the open valves 18 in some cases, which may hinder the open valves 18 from being opened.

As in the case of the battery holders 31, 51 shown in Fig. 9A and 9B, the projecting portions 91, 92 may be on the entry side for inserting the prismatic batteries 11, 12 into the accommodating portions S1, S2. In this case, the projecting portions 91, 92 do not need to extend toward the infusion portions 21, or in the thickness direction of the prismatic batteries 11, 12. The entry side is defined with respect to the transverse direction of the second covering portions 34, 54 and the third covering portions 35, 55 and refers to a side on which no fourth covering portions 36, 56 are formed. This prevents the projecting portions from contacting the open valves.

The projecting portions 91, 92 may be formed at positions other than positioning portions 40, 64. For example, in a structure without positioning portion 40, 64, the projecting portions 91, 92 may be provided on the terminal accommodating portions 38, 58 or on the second covering portion 34, 54.

In the above illustrated embodiment, the wall members 39, 63, which are indicators, may be omitted. Even in this case, the projecting portions 41, 65 prevent connecting terminals of the same polarity from being adjacent to each other in the arrangement direction of the prismatic batteries 11, 12, thereby preventing the bus bars B from being attached to wrong connecting terminals.

In the above illustrated embodiment, the wall members are used as indicators. However, sections of different colors or marks may be provided between bus bars B adjacent to each other in the arrangement direction of prismatic batteries to prevent the bus bars B from being attached to wrong positions.

In the above illustrated embodiment, the first projecting portions 41 and the second projecting portions 65 of the first battery holders 31 and the second battery holders 51 may be omitted. In this case, it is preferable to use structures other than the projecting portions to prevent wrong prismatic batteries from being installed.

In the above illustrated embodiment, the infusion portions 21 do not necessarily need to be used as first protrusions or second protrusions. Instead, protrusions protruding from the lid members 17 may be provided.

In the above illustrated embodiment, cylindrical batteries or laminate batteries may be used as the first battery cells and the second battery cells. In this case, the shape of the battery holders is changed in conformity with the shape of the battery cells.

In the above illustrated embodiment, the combination of the protrusions and recesses formed in the positioning portions 40, 45, 61, 64 may be changed as long as adjacent arrangement of the first battery holders 31 and adjacent arrangement of the second battery holders 51 are prevented.

In the above illustrated embodiment, the colors of the first battery holders 31 and the second battery holders 51 may be differentiated to prevent the first battery holders 31 or the second battery holders 51 from being arranged consecutively.

In the above described embodiment, the shapes of the positive terminals 13 and the negative terminals 14 of the prismatic batteries 11, 12 may be differentiated, and the shapes of the terminal accommodating portions 38, 42, 58, 62 of the battery holders 31, 51 may be differentiated. In this case, the shapes are determined such that, when an attempted is made to fit a second prismatic battery 12 in any of the terminal accommodating portions 38, 42 of the first battery holders 31, the positive terminal 13 and the negative terminal 14 cannot be accommodated in the terminal accommodating portions 38, 42. In this manner, the second prismatic battery 12 is prevented from being held by the first battery holder 31. Likewise, the first prismatic battery 11 is prevented from being held by the second battery holder 51.

Bus bars having a shape other than a plate-like shape may be used in the above illustrated embodiment. In this case, the wall members 39, 63 are preferably arranged such that when an attempt is made to attach a bus bar to a wrong position, the bus bar contacts the wall members 39, 63.

In the above illustrated embodiment, the first battery holders 31 and the second battery holders 51 have shapes that cover five surfaces of each of the prismatic batteries 11, 12. However, the present invention is not limited to this. For example, only the surfaces that intersect with the thickness direction of the prismatic batteries 11, 12 may be covered. Also, plate-like members that sandwich each of the prismatic batteries 11, 12 in the thickness direction may be employed.

In the illustrated embodiment, the prismatic batteries 11, 12 may be arranged side by side such that connecting terminals of the same polarity are arranged to be adjacent to each other. In this case, the positive terminal 13 and the negative terminal 14 (connecting terminals of different polarities) of the prismatic batteries 11, 12 of each adjacent pair thereof are connected to each other by a bus bar B. Also, each of the battery holders 31, 51 may have a wall member that guides the bus bar B. The wall member is provided between the bus bars of adjacent pair thereof and extends from the positive terminal 13 (or the negative terminal 14) of the first prismatic battery 11 to the negative terminal 14 (or the positive terminal 13) of the adjacent prismatic battery 12. When a bus bar is put in place, the bus bar is placed along the wall member, so that the wall member serves as an indicator to prevent the bus bar B from being placed in a wrong position.

In the above illustrated embodiment, indicators that are not visually recognizable may be employed. For example, a protuberance of a size that is not visually recognizable may be provided at a position in each of the battery holders 31, 51 that is between bus bars B adjacent to each other in the arrangement direction of the battery bodies 1, 2. If such a protuberance can be recognized when touched, the protuberance serves as an indicator for determining the correct position of the bus bar B.

## Claims

1. A battery module comprising first and second battery bodies (1, 2), wherein
each of the first and second battery bodies (1, 2) includes two connecting terminals (13, 14) of different polarities,
the first battery bodies (1) and the second battery bodies (2) are arranged alternately such that the polarities of the connecting terminals (13, 14) of each adjacent pair thereof are different from each other,
each first battery body (1) is constituted by a first battery holder (31) and a first battery cell (11), which is held by the first battery holder (31),
each second battery body (2) is constituted by a second battery holder (51) and a second battery cell (12), which is held by the second battery holder (51),
each first battery cell (11) includes a first protrusion (24) on a terminal surface, on which the connecting terminals (13, 14) are provided,
each second battery cell (12) includes a second protrusion (24) on a terminal surface, on which the connecting terminals (13, 14) are provided, wherein the second protrusion (24) does not face any of the first protrusions (24) in an arrangement direction of the battery cells (11, 12),
each first battery holder (31) includes a first projecting portion (41), wherein, when an attempt is made to fit the second battery cell (12) to the first battery holder (31), the first projecting portion (41)contacts the second protrusion (24), thereby preventing the second battery cell (12) from being accommodated in the first battery holder (31), and
each second battery holder (51) includes a second projecting portion (65), wherein, when an attempt is made to fit the first battery cell (11) to the second battery holder (51), the second projecting portion (65) contacts the first protrusion (24), thereby preventing the first battery cell (11) from being accommodated in the second battery holder (51).

2. The battery module according to claim 1, wherein each first protrusion (24) and each second protrusion (24) are each provided at an infusion port (22) of the corresponding one of the first battery cells (11) and the second battery cells (12).

## Patentansprüche

1. Batteriemodul, das erste und zweite Batteriekörper (1, 2) aufweist, wobei
jeder von dem ersten und zweiten Batteriekörper (1, 2) zwei Verbindungsanschlüsse (13, 14) mit unterschiedlichen Polaritäten aufweist,
die ersten Batteriekörper (1) und die zweiten Batteriekörper (2) abwechselnd derart angeordnet sind, dass die Polaritäten der Verbindungsanschlüsse (13, 14) von jedem benachbarten Paar davon voneinander verschieden sind,
jeder erste Batteriekörper (1) durch eine erste Batteriehalterung (31) und eine erste Batteriezelle (11) gebildet ist, die durch die erste Batteriehalterung (31) gehalten wird,
jeder zweite Batteriekörper (2) durch eine zweite Batteriehalterung (51) und eine zweite Batteriezelle (12) gebildet ist, die durch die zweite Batteriehalterung (51) gehalten wird,
jede erste Batteriezelle (11) einen ersten Vorsprung (24) an einer Anschlussfläche aufweist, an der die Verbindungsanschlüsse (13, 14) vorgesehen sind,
jede zweite Batteriezelle (12) einen zweiten Vorsprung (24) an einer Anschlussfläche aufweist, an der die Verbindungsanschlüsse (13, 14) vorgesehen sind, wobei der zweite Vorsprung (24) zu keinem der ersten Vorsprünge (24) in einer Anordnungsrichtung der Batteriezellen (11, 12) zugewandt ist,
jede erste Batteriehalterung (31) einen ersten Vorsprungsabschnitt (41) aufweist, wobei, wenn ein Versuch gemacht wird, die zweite Batteriezelle (12) in die erste Batteriehalterung (31) einzupassen, der erste Vorsprungsabschnitt (41) den zweiten Vorsprung (24) berührt, um dadurch die Aufnahme der zweiten Batteriezelle (12) in der ersten Batteriehalterung (31) zu verhindern, und
jede zweite Batteriehalterung (51) einen zweiten Vorsprungsabschnitt (65) aufweist, wobei, wenn ein Versuch gemacht wird, die erste Batteriezelle (11) in die zweite Batteriehalterung (51) einzupassen, der zweite Vorsprungsabschnitt (65) den ersten Vorsprung (24) berührt, um dadurch die Aufnahme der ersten Batteriezelle (11) in der zweiten Batteriehalterung (51) zu verhindern.

2. Batteriemodul nach Anspruch 1, wobei jeder erste Vorsprung (24) und jeder zweite Vorsprung (24) an einem Eingießanschluss (22) der korrespondierenden Zelle der ersten Batteriezellen (11) und der zweiten Batteriezellen (12) entsprechend vorgesehen sind.

## Revendications

1. Module de batterie comprenant un premier et un second corps de batterie (1, 2), dans lequel
chacun du premier et du second corps de batterie (1, 2) comprend deux bornes de liaison (13, 14) de différentes polarités,
le premier corps de batterie (1) et le second corps de batterie (2) sont disposés de manière alternée de sorte que les polarités des bornes de liaison (13, 14) de chaque paire adjacente de celles-ci soient différentes les unes des autres,
chaque premier corps de batterie (1) est constitué par un premier support de batterie (31) et une première cellule de batterie (11), qui est maintenue par le premier support de batterie (31),
chaque second corps de batterie (2) est constitué d'un second support de batterie (51) et d'une seconde cellule de batterie (12), qui est maintenue par le second support de batterie (51),
chaque première cellule de batterie (11) comprend une première saillie (24) sur une surface de bornes, sur laquelle les bornes de liaison (13, 14) sont prévues,
chaque seconde cellule de batterie (12) comprend une seconde saillie (24) sur une surface de bornes, sur laquelle les bornes de liaison (13, 14) sont prévues, dans lequel la seconde saillie (24) ne fait face à aucune des premières saillies (24) dans une direction d'agencement des cellules de batterie (11, 12),
chaque premier support de batterie (31) comprend une première partie en saillie (41), dans lequel, en cas de tentative de placer la seconde cellule de batterie (12) sur le premier support de batterie (31), la première partie en saillie (41) touche la seconde saillie (24), afin d'empêcher la seconde cellule de batterie (12) d'être placée dans le premier support de batterie (31), et
chaque second support de batterie (51) comprend une seconde partie en saillie (65), dans lequel, en cas de tentative de placer la première cellule de batterie (11) sur le second support de batterie (51), la seconde partie en saillie (65) touche la première saillie (24), afin d'empêcher la première cellule de batterie (11) d'être placée dans le second support de batterie (51).

2. Module de batterie selon la revendication 1, dans lequel chaque première saillie (24) et chaque seconde saillie (24) sont chacune prévue au niveau d'un orifice d'injection (22) de l'une des premières cellules de batterie (11) et des secondes cellules de batterie (12).
